(19) Europäisches Patentamt
European Patent Office
Office européen des brevets

(11) **EP 4 650 906 A1**

(12) **DEMANDE DE BREVET EUROPEEN**

(43) Date de publication:
**19.11.2025 Bulletin 2025/47**

(21) Numéro de dépôt: **25176605.1**

(22) Date de dépôt: **15.05.2025**

(51) Classification Internationale des Brevets (IPC):
**G05D 23/19** *(2006.01)*

(52) Classification Coopérative des Brevets (CPC):
**G05D 23/1917; G05D 23/1931**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **16.05.2024 FR 2405027**

(71) Demandeur: **DELTA DORE**
**35270 Bonnemain (FR)**

(72) Inventeurs:
• **BRUN, Adrien**
  **38054 Grenoble (FR)**
• **BERNAUD, Pierre**
  **38054 Grenoble (FR)**
• **LE DUC, Minh Khang**
  **35270 Bonnemain (FR)**

(74) Mandataire: **Cabinet Le Guen Maillet**
  **3, impasse de la Vigie**
  **CS 71840**
  **35418 Saint-Malo Cedex (FR)**

(54) **PROCÉDÉ DE PILOTAGE D'UN APPEL DE PUISSANCE ÉLECTRIQUE**

(57) Procédé (100) de pilotage d'un appel de puissance d'un dispositif de chauffage et/ou de refroidissement d'une pièce d'un bâtiment, le procédé étant mis en œuvre par un dispositif de pilotage comprenant de la circuiterie électronique adaptée pour implémenter le procédé. Le procédé de pilotage comprend au moins les étapes suivantes :
- (Etape 1) Acquérir, pendant une durée prédéterminée, des données de température comprenant une température extérieure de la pièce, une température intérieure de la pièce et une température de consigne du dispositif de chauffage et/ou de refroidissement, des données de puissance électrique consommée par le dispositif de chauffage et/ou de refroidissement ;
- (Etape 2) Modéliser un appel de puissance électrique correspondant à une phase de relance du dispositif de chauffage et/ ou de refroidissement ;
- (Etape 3) Prévoir l'appel de puissance électrique induit par le dispositif de chauffage et/ou de refroidissement ;
- (Etape 4) Piloter le dispositif de chauffage et/ou de refroidissement, en fonction d'une prévision de l'étape 3 pour l'intégrer de manière optimale dans un mix de consommation électrique d'un bâtiment.

EP 4 650 906 A1

## Description

DOMAINE TECHNIQUE

L'invention concerne le domaine du pilotage des dispositifs de chauffage et/ou de refroidissement à effet Joule ou thermodynamique.

ETAT DE LA TECHNIQUE ANTERIEURE

Il est connu d'utiliser des dispositifs de chauffage et/ou de refroidissement, tels que les pompes à chaleur. De tels dispositifs sont généralement asservis avec une température de consigne. D'une manière connue lorsque la température intérieure descend (monte) en dessous (au-dessus) d'un certain seuil par rapport à la température de consigne, le dispositif est mis en fonctionnement pour réguler la température en chauffant ou en refroidissant la pièce d'un bâtiment dans lequel le dispositif est installé.

Les mises en fonctionnement du dispositif pour réguler la température sont communément appelées « relance ». Il s'agit de périodes temporelles, durant lesquelles le dispositif est relancé pour réguler la température, d'une température de consigne réduite à une température de confort. Classiquement, on distingue trois phases de fonctionnement distinctes pour les dispositifs de chauffage et /ou de refroidissement tels que les pompes à chaleur : une phase de relance dans laquelle le dispositif est sollicité potentiellement à sa puissance nominale, une phase de maintien de la température de confort, et une phase de réduit dans laquelle la température peut dériver jusqu'à un point de consigne bas (ou haut dans le cas du rafraîchissement) à partir duquel le dispositif est sollicité pour maintenir la température de réduit. Les dispositifs de chauffage et/ou de refroidissement peuvent générer un important appel de puissance électrique lors d'une relance. Or, un pic de puissance consommée peut faire disjoncter un compteur électrique si le contrat de fourniture d'électricité souscrit ne permet pas d'atteindre la puissance électrique appelée. De plus, le pic de consommation peut impacter significativement une facture d'électricité s'il a lieu dans une période horaire de tranche tarifaire élevée.

Dans ce contexte, il est nécessaire de fournir un procédé de pilotage qui permette de prévoir un appel de puissance correspondant à une période de relance afin de l'intégrer de manière optimale dans un mix de consommation électrique d'un bâtiment et de minimiser la puissance électrique consommée et/ou facturée.

EXPOSE DE L'INVENTION

A cet effet, selon un premier aspect, il est proposé un procédé de pilotage d'un appel de puissance d'un dispositif de chauffage et/ou de refroidissement d'une pièce d'un bâtiment, le procédé étant mis en œuvre par un dispositif de pilotage comprenant de la circuiterie électronique adaptée pour implémenter le procédé. Le procédé de pilotage comprend au moins les étapes suivantes :

- (Etape 1) Acquérir, pendant une durée prédéterminée, des données de température comprenant une température extérieure de la pièce, une température intérieure de la pièce et une température de consigne du dispositif de chauffage et/ou de refroidissement, des données de puissance électrique consommée par le dispositif de chauffage et/ou de refroidissement ;

- (Etape 2) Modéliser un appel de puissance électrique correspondant à une phase de relance du dispositif de chauffage et/ ou de refroidissement ;

- (Etape 3) Prévoir l'appel de puissance électrique induit par le dispositif de chauffage et/ou de refroidissement ;

- (Etape 4) Piloter le dispositif de chauffage et/ou de refroidissement, en fonction d'une prévision de l'étape 3 pour l'intégrer de manière optimale dans un mix de consommation électrique d'un bâtiment.

Ainsi, le procédé de pilotage permet de prévoir un appel de puissance correspondant à une période de relance afin de l'intégrer de manière optimale dans un mix de consommation électrique d'un bâtiment. Dans le cas d'une production locale d'énergie photovoltaïque, le procédé peut permettre de faire coïncider le fonctionnement du dispositif de chauffage et/ou de refroidissement avec une période de production, pour maximiser une autoconsommation.

Selon une disposition particulière, l'étape 2 de modélisation comprend d'établir un modèle simplifié d'une phase de relance.

Selon une disposition particulière, le modèle de durée est établi en fonction d'un écart de température intérieure entre la température intérieure acquise et une température intérieure maximale acquise, tel que : $dT_{int}$ = max ($T_{int}(t \in relance)$) - $T_{int}(t = 0)$

Selon une disposition particulière, le modèle de durée est établi en fonction d'une différence entre la température intérieure et la température extérieure acquises toutes les deux à un même instant, de sorte que

$$\Delta T(t = 0) = T_{int}(t = 0) - T_{ext}(t = 0)$$

Selon une disposition particulière, le modèle de durée est établi en fonction de l'écart de température intérieure et de la différence de température, de sorte que

$$Durée = f\big(dT_{int}, \Delta T(t = 0)\big)$$

Selon une disposition particulière, l'étape 2 de modélisation comprend de calculer une différence de température moyenne entre l'intérieur et l'extérieur sur la durée d'une phase de relance, tel que : $\overline{\Delta T} = \overline{T_{Ext}(to, to + durée)} - \overline{T_{Int}(to, to + durée)}$

Selon une disposition particulière, l'étape 2 de modélisation comprend de déterminer une puissance maximale utilisée selon max $(P_{Elec}) = g(\overline{\Delta T})$
et de déterminer une énergie électrique consommée selon

$$E_{elec} = h(dT_{int}, \overline{\Delta T})$$

Selon une disposition particulière, l'étape 3 de prévision comprend d'intégrer des données prévisionnelles dans le modèle, de sorte qu'une température de consigne est utilisée à la place d'une température intérieure maximale et/ou une température extérieure prévisionnelle est utilisée à la place d'une température extérieure.

Selon un autre aspect, il est proposé un dispositif qui comprend de la circuiterie électronique pour implémenter un procédé comprenant au moins les étapes suivantes :

- (Etape 1) Acquérir, pendant une durée prédéterminée, des données de température comprenant une température extérieure de la pièce, une température intérieure de la pièce et une température de consigne du dispositif de chauffage et/ou de refroidissement, des données de puissance électrique consommée par le dispositif de chauffage et/ou de refroidissement ;

- (Etape 2) Modéliser un appel de puissance électrique correspondant à une phase de relance du dispositif de chauffage et/ ou de refroidissement ;

- (Etape 3) Prévoir l'appel de puissance électrique induit par le dispositif de chauffage et/ou de refroidissement ;

- (Etape 4) Piloter le dispositif de chauffage et/ou de refroidissement, en fonction d'une prévision de l'étape 3 pour l'intégrer de manière optimale dans un mix de consommation électrique d'un bâtiment.

Selon un autre aspect, il est proposé un produit programme d'ordinateur comprenant des instructions de code de programme pour exécuter le procédé.

Selon un autre aspect, il est proposé un support de stockage non transitoire sur lequel est stocké un programme d'ordinateur comprenant des instructions de code de programme pour exécuter le procédé, lorsque lesdites instructions sont lues depuis ledit support de stockage non transitoire et exécutées par un processeur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement le déroulement d'un procédé de pilotage ;
[Fig. 2] illustre schématiquement la modélisation d'une phase de relance ;
[Fig. 3] illustre schématiquement une régression linéaire de la durée d'une phase de relance en fonction de l'écart de température intérieure et de température extérieure acquises au début de la phase de relance ;
[Fig. 4] illustre schématiquement une régression linéaire de la puissance électrique maximum appelée en fonction d'un écart moyen de température intérieure acquise et de température extérieure acquise ;

[Fig. 5] illustre schématiquement une régression linéaire de l'énergie électrique consommée en fonction de l'écart moyen de température intérieure acquise et de température extérieure acquise ;

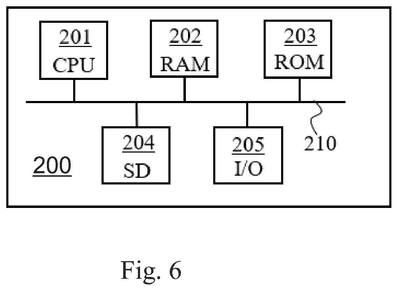

[Fig. 6] illustre schématiquement un système informatique adapté pour implémenter le procédé.

## EXPOSE DETAILLE DE MODES DE REALISATION

*Procédé de pilotage*

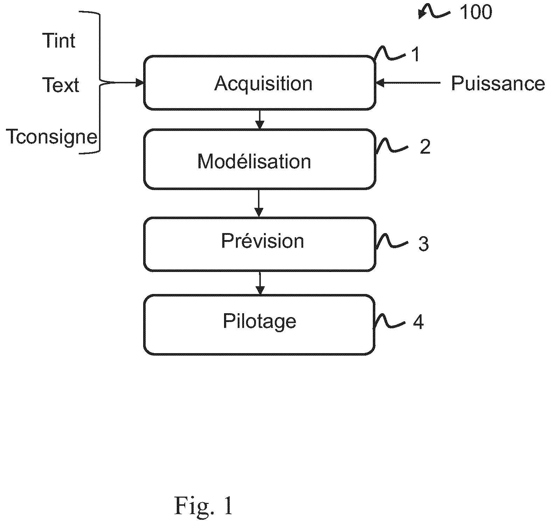

En référence à la Fig. 1, selon un premier aspect, il est proposé un procédé 100 de pilotage d'un appel de puissance d'un dispositif de chauffage et/ou de refroidissement d'une pièce d'un bâtiment. Typiquement, le dispositif de chauffage et/ou de refroidissement peut être une pompe à chaleur.

Le procédé 100 est mis en œuvre par un dispositif de pilotage comprenant de la circuiterie électronique 200 adaptée pour implémenter le procédé. Le dispositif de pilotage sera décrit ci-après.

Tel que schématisé sur la Fig. 1, le procédé 100 de pilotage comprend au moins les étapes suivantes :

- (Etape 1) Acquérir, pendant une durée prédéterminée, des données de température comprenant une température extérieure de la pièce, une température intérieure de la pièce et une température de consigne du dispositif de chauffage et/ou de refroidissement, des données de puissance électrique consommée par le dispositif de chauffage et/ou de refroidissement ;

- (Etape 2) Modéliser un appel de puissance électrique correspondant à une phase de relance du dispositif de chauffage et/ ou de refroidissement ;

- (Etape 3) Prévoir l'appel de puissance électrique induit par le dispositif de chauffage et/ou de refroidissement ;

- (Etape 4) Piloter le dispositif de chauffage et/ou de refroidissement, en fonction d'une prévision de l'étape 3 pour l'intégrer de manière optimale dans un mix de consommation électrique d'un bâtiment.

Ainsi, le procédé 100 de pilotage permet de prévoir un appel de puissance correspondant à une période de relance afin de l'intégrer de manière optimale dans un mix de consommation électrique d'un bâtiment. Dans le cas d'une production locale d'énergie photovoltaïque, le procédé peut permettre de faire coïncider le fonctionnement du dispositif de chauffage et/ou de refroidissement avec une période de production, pour maximiser une autoconsommation.

*Notion de relance*

Il est précisé que dans le présent document, par relance, il est entendu une phase de fonctionnement du dispositif de chauffage et/ou de refroidissement, durant laquelle le dispositif de chauffage et/ou de refroidissement est relancé pour réguler la température, d'une température de consigne réduite à une température de consigne de confort. Durant une phase de relance, le dispositif est sollicité potentiellement à sa puissance nominale.

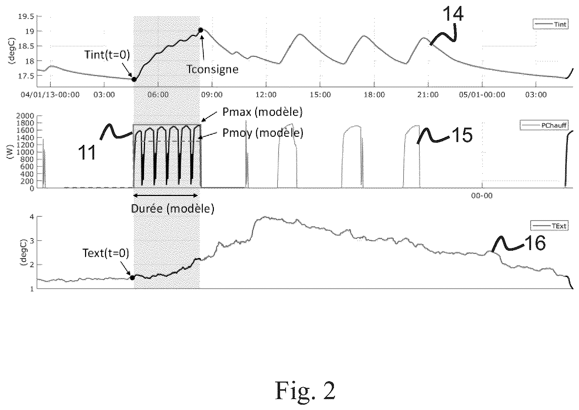

La Fig. 2 représente l'évolution de la température intérieure (courbe 14), de la puissance électrique consommée (courbe 15) et de la température extérieure (courbe 16) lors d'une phase de relance. La Fig. 2 permet d'observer l'évolution de la température intérieure lors d'une phase de relance et les pics de consommations de puissance électrique lors de la phase de relance. Il est précisé que les courbes de la Fig. 2 correspondent à un exemple particulier, les valeurs précises des points des courbes sont spécifiques à l'exemple représenté et sont dépendantes des caractéristiques de chaque bâtiment et de chaque dispositif de chauffage/refroidissement.

*Etape 1 - Acquisition*

Comme indiqué précédemment, le procédé 100 comprend tout d'abord une étape 1 d'acquisition des données de température, pendant une durée prédéterminée.

Typiquement, les données de température acquises comprennent : une température extérieure de la pièce, une température intérieure de la pièce et une température de consigne du dispositif de chauffage et/ou de refroidissement. L'acquisition de la température de consigne et de la température intérieure de la pièce permet de comparer une température souhaitée (la température de consigne) avec une température ambiante (la température intérieure de la pièce). Tel que cela sera décrit ci-après, l'augmentation d'une différence entre la température intérieure de la pièce et la température de consigne permet de prévoir l'imminence d'une phase de relance, cela est notamment observable sur les graphiques de la Fig. 2.

Les données de température acquises peuvent aussi comprendre la température extérieure de la pièce.

L'acquisition de la température extérieure de la pièce permet très avantageusement de prévoir des variations de la température intérieure de la pièce. En effet, quelle que soit la qualité de l'isolation de la pièce, une augmentation ou une diminution de la température extérieure se répercute nécessairement sur la température intérieure de la pièce. En d'autres termes, la température extérieure a nécessairement un impact sur les déperditions énergétiques du bâtiment dans lequel se trouve la pièce considérée, et par conséquent, la température extérieure a un impact sur l'énergie nécessaire pour effectuer la variation de température de la phase de relance. Cela est notamment observable sur les graphiques de la Fig. 2 sur lesquels il est visible que la diminution de la température intérieure correspond notamment à une diminution de la température extérieure.

D'une manière particulièrement avantageuse, des données de rayonnement solaire incident peuvent aussi être acquises. De même que pour les données de température extérieure, les données de rayonnement solaire incident peuvent aussi avoir un impact sur l'énergie nécessaire pour effectuer la variation de température de la phase de relance.

En outre, les données acquises comprennent aussi des données de puissance électrique consommée par le dispositif de chauffage et/ou de refroidissement.

D'une manière préférentielle, les données acquises sont horodatées, ce qui permet très avantageusement d'effectuer des associations et des comparaisons.

En outre, d'une manière préférentielle, l'acquisition se fait sur une durée prédéterminée, de sorte à acquérir une pluralité de données.

*Etape 2 - Modélisation*

Le procédé 100 comprend ensuite une étape 2 de modélisation d'un appel de puissance électrique correspondant à une phase de relance du dispositif de chauffage et/ ou de refroidissement.

En référence à la Fig. 2, l'objectif de l'étape de modélisation est de déterminer l'enveloppe 11 en fonction des données acquises à l'étape 1.

En d'autres termes, tel que schématisé sur la Fig. 2, les données acquises sur la période prédéterminée peuvent être représentées graphiquement selon les courbes 14, 15 et 16.

Ainsi, sur la Fig. 2, la courbe 14 représente une évolution de la température intérieure en fonction du temps. La courbe 15 représente une évolution de la puissance électrique consommée en fonction du temps, et la courbe 16 représente une évolution de la température extérieure en fonction du temps.

L'objectif de l'étape 2 est de reconnaître une période de relance, sur la base des données acquises, pour en déduire un modèle schématisé par l'enveloppe 11. En d'autres termes, l'étape 2 permet d'obtenir un modèle représentant l'enveloppe 11 de la puissance électrique induite par la relance.

Ainsi, d'une manière particulièrement avantageuse, l'étape 2 de modélisation comprend d'établir un modèle simplifié d'une phase de relance. Tel que cela sera détaillé ci-après, la modélisation de l'étape 2 peut comprendre d'établir trois modèles : durée, puissance moyenne et puissance maximale. Ces trois modèles permettent, ensemble, de modéliser une phase de relance pour déterminer l'enveloppe 11.

Le modèle d'une durée d'une phase de relance peut être établi en fonction d'un écart de température intérieure entre la température intérieure acquise et une température intérieure maximale acquise, tel que : $dT_{int}$ = max ($T_{int}(t \in relance)$) - $T_{int}(t = 0)$

Le modèle d'une durée d'une phase de relance est aussi établi en fonction d'une différence entre la température intérieure et la température extérieure acquises toutes les deux à un même instant, de sorte que

$$\Delta T(t = 0) = T_{int}(t = 0) - T_{ext}(t = 0)$$

Ainsi, le modèle d'une durée d'une phase de relance peut être établi en fonction de l'écart de température intérieure et de la différence de température, de sorte que

$$Durée = f\big(dT_{int}, \Delta T(t = 0)\big)$$

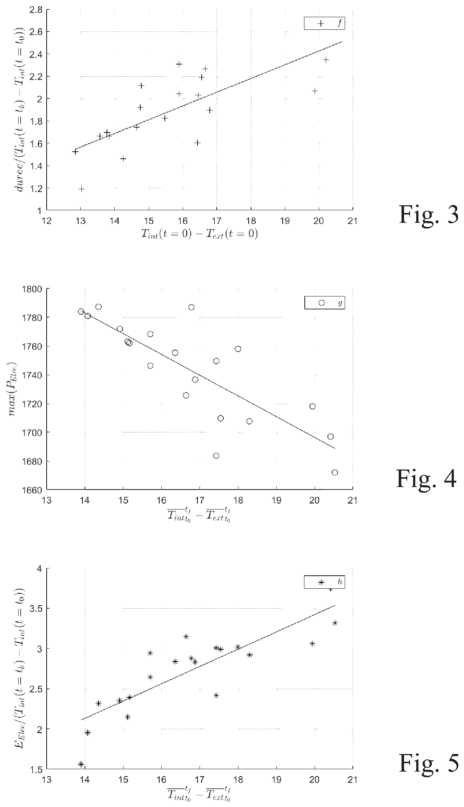

En référence à la Fig. 3, la durée de la relance est exprimée en hr/°C. Il est précisé que les °C correspondent à l'augmentation de température induite par la relance (notée $dT_{int}$ précédemment). La durée est exprimée en fonction de l'écart de température intérieure/extérieure à t=0. La Fig. 3 représente la superposition d'une régression linéaire sur une série de points obtenus. Cette régression linéaire correspond à la fonction f recherchée dans l'équation de détermination de la durée.

Selon une disposition particulière, l'étape de modélisation comprend aussi de calculer une différence de température moyenne entre l'intérieur et l'extérieur sur la durée d'une phase de relance, tel que : $\overline{\Delta T} = \overline{T_{Ext}(to,\ to + durée)} - \overline{T_{Int}(to,\ to + durée)}$

Selon une disposition particulière, l'étape de modélisation comprend aussi de déterminer une puissance maximale utilisée selon max ($P_{Elec}$) = $g(\overline{\Delta T})$
et de déterminer une énergie électrique consommée selon

$$E_{elec} = h(dT_{int}, \overline{\Delta T})$$

En effet, tel qu'indiqué précédemment, la combinaison astucieuse de la modélisation de la durée de la phase de relance avec la modélisation de la puissance moyenne et de la puissance maximale permet d'obtenir un modèle simple et exploitable d'une phase de relance.

La Fig. 4 représente la puissance électrique maximum appelée en fonction de l'écart moyen de température intérieure/extérieure ainsi que la régression linéaire associée, ce qui correspond à la fonction g de l'équation exprimant la puissance maximale utilisée.

La Fig. 5 représente l'énergie électrique consommée en kWh/°C en fonction de l'écart moyen de température intérieure/extérieure. °C étant l'augmentation de température induite par la relance (notée $dT_{int}$ précédemment), ainsi que la régression linéaire associée

Selon une disposition particulière, la puissance électrique moyenne consommée peut être calculée en combinant les résultats de la détermination de la différence de température moyenne et les résultats de la détermination de l'énergie électrique consommée, de sorte que :

$$\overline{P_{Elec}} = \frac{E_{elec}}{Duree}$$

*Etape 3 - Prévision*

Comme indiqué précédemment, suite à la modélisation, le procédé 100 comprend une étape 3 de prévision de l'appel de puissance électrique induit par le dispositif de chauffage et/ou de refroidissement (i.e. de prévision de l'évolution d'un besoin de puissance électrique par le dispositif de chauffage et/ou de refroidissement). L'étape 3 correspond à une phase d'exploitation du modèle établi lors de l'étape 2.

Selon une disposition particulière, l'étape 3 de prévision comprend d'intégrer des données prévisionnelles dans le modèle, de sorte qu'une température de consigne est utilisée à la place d'une température intérieure maximale mesurée et/ou une température extérieure prévisionnelle est utilisée à la place d'une température extérieure mesurée. En d'autres termes l'étape 3 de prévision ne se base pas sur une observation des variations de température comme c'est le cas pour l'étape 2 de modélisation, mais cherche à prendre en compte une variation de température à venir en intégrant dans le modèle, la température de consigne qui est estimée comme étant une température intérieure maximale à atteindre. De même, des données issues de scénarii ou d'autres prévisions peuvent être utilisées à la place des données acquises. Il est précisé que les données intégrées dans le modèle pour l'étape 3 peuvent être mises à jour lorsque de nouvelles séquences de relance sont enregistrées.

Lors de l'exécution de l'étape 3, les équations établies lors de l'étape 2 sont utilisées avec des données d'entrées différentes, de sorte que :

$$dT_{int} = T_{Consigne} - T_{int}(t = 0)$$

$$\overline{\Delta T} = \overline{T_{Ext(prevision)} (to, to + durée)} - (T_{Consigne} + T_{int}(t = 0))/2$$

Les équations suivantes, combinées aux grandeurs d'entrée calculées sont utilisées pour exprimer la prévision de durée, la puissance électrique maximum appelée ainsi que la puissance électrique moyenne appelée :

$$Duree\ (j) = (D1 \times \Delta T(t = 0)(j) + D2) \times dT_{int}(j)\ [hr]$$

$$\max\ (P_{Elec}\ (j)) = M1 \times \left( \overline{T_{Int}}(j) - \overline{T_{Ext}}(j) \right) + M2\ [W]$$

$$\overline{P_{Elec}}(j) = \left( E1 \times \left( \overline{T_{Int}}(j) - \overline{T_{Ext}}(j) \right) + E21 \right) \times dT_{int}(j) \, / \, Duree\ (j) \times 1000$$

$$[\text{Wh/}°\text{C}]$$

Avec D1, D2, M1, M2, E1 et E2 des paramètres issus de la modélisation de l'étape 2. Plus précisément, ces paramètres sont obtenus par régression linéaire du modèle de l'étape 2.

*Etape 4 - Pilotage*

Le procédé 100 comprend ensuite une étape 4 de pilotage d'un appel de puissance du dispositif de chauffage et/ou de refroidissement, en fonction d'une prévision de l'étape 3 pour prévoir un appel de puissance correspondant à une période de relance afin de l'intégrer de manière optimale dans un mix de consommation électrique d'un bâtiment.

En d'autres termes, l'étape 3 permet de prévoir le déclenchement potentiel d'une phase de relance. Lors de l'étape 4, le procédé 100 permet de commander le déclenchement de la phase de relance, pour intégrer, de façon optimale, l'appel de puissance de la phase de relance parmi d'autres appels de puissance électrique ayant lieu au même moment.

Ainsi, dans le cas par exemple d'un bâtiment comprenant un four électrique, une pompe à chaleur et une borne de recharge de véhicule électrique, si ces trois objets effectuent en même temps un appel de puissance, il est possible de faire disjoncter le compteur électrique du bâtiment (si l'abonnement électrique souscrit n'est pas suffisant). Le pilotage de l'étape 4 permet, par exemple, de déclencher une phase de relance plus tôt ou plus tard que prévu en fonction des autres appels de puissance ayant lieu. Par ailleurs le pilotage de l'étape 4 permet aussi de décaler l'appel de puissance de la phase de relance en fonction de contraintes tarifaires, pour diminuer le coût de la puissance électrique consommée lors de la phase de relance.

*Produit programme d'ordinateur*

Selon un autre aspect, il est proposé un produit programme d'ordinateur comprenant des instructions de code de programme pour exécuter le procédé 100 de pilotage.

*Support de stockage*

Selon un autre aspect, il est proposé un support de stockage non transitoire sur lequel est stocké un programme d'ordinateur comprenant des instructions de code de programme pour exécuter le procédé 100 de pilotage, lorsque lesdites instructions sont lues depuis ledit support de stockage non transitoire et exécutées par un processeur.

*Dispositif de pilotage*

Selon un autre aspect, il est proposé un dispositif de pilotage comprenant de la circuiterie électronique (système informatique 200) adaptée pour implémenter un procédé 100.

Tel que schématisé sur la Fig. 2, le système informatique 200 peut comporter, reliés par un bus de communication 210 : un processeur 201 ; une mémoire vive 202 ; une mémoire morte 203, par exemple de type ROM (« Read Only Memory » en anglais) ou EEPROM (« Electrically-Erasable Programmable Read Only Memory » en anglais) ; une unité de stockage 204, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur permettant l'implémentation, par le processeur 201, du procédé 100.

Tout ou partie du procédé 100 peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant dédié, par exemple un composant FPGA (« Field Programmable Gate Array » en anglais) ou ASIC (« Application-Specific Integrated Circuit » en anglais). D'une manière générale, le système informatique 200 comporte de la circuiterie électronique adaptée et configurée pour implémenter, sous forme logicielle et/ou matérielle, le procédé 100 en relation avec le système informatique 200 en question.

D'une manière particulièrement avantageuse, l'exécution du procédé 100 nécessite peu de ressources en termes de puissance de calcul ou de quantité de mémoire. Ainsi, le procédé 100 peut être exécuté par un dispositif 200 présentant des capacités dites limitées et peu consommatrices d'énergie et ne nécessitant pas nécessairement l'utilisation de serveurs distants.

## Revendications

1. Procédé (100) de pilotage d'un appel de puissance d'un dispositif de chauffage et/ou de refroidissement d'une pièce d'un bâtiment, le procédé (100) étant mis en œuvre par un dispositif de pilotage comprenant de la circuiterie électronique (200) adaptée pour implémenter le procédé, le procédé (100) de pilotage étant **caractérisé en ce qu'**il comprend au moins les étapes suivantes :

   - (Etape 1) Acquérir, pendant une durée prédéterminée, des données de température comprenant une température extérieure de la pièce, une température intérieure de la pièce et une température de consigne du dispositif de chauffage et/ou de refroidissement, des données de puissance électrique consommée par le dispositif de chauffage et/ou de refroidissement ;
   - (Etape 2) Modéliser un appel de puissance électrique correspondant à une phase de relance du dispositif de chauffage et/ ou de refroidissement ;
   - (Etape 3) Prévoir l'appel de puissance électrique induit par le dispositif de chauffage et/ou de refroidissement ;
   - (Etape 4) Piloter le dispositif de chauffage et/ou de refroidissement, en fonction d'une prévision de l'étape 3 pour l'intégrer de manière optimale dans un mix de consommation électrique d'un bâtiment.

2. Procédé (100) selon la revendication 1, dans lequel l'étape 2 de modélisation comprend d'établir un modèle simplifié d'une phase de relance.

3. Procédé (100) selon la revendication 2, dans lequel le modèle de durée est établi en fonction d'un écart de température intérieure entre la température intérieure acquise et une température intérieure maximale acquise, tel que : $dT_{int} = \max (T_{int}(t \in relance)) - T_{int}(t = 0)$

4. Procédé (100) selon l'une quelconque des revendications 2 ou 3, dans lequel le modèle de durée est établi en fonction d'une différence entre la température intérieure et la température extérieure acquises toutes les deux à un même instant, de sorte que

$$\Delta T(t = 0) = T_{int}(t = 0) - T_{ext}(t = 0)$$

5. Procédé (100) selon les revendications 3 et 4 en combinaison, dans lequel le modèle de durée est établi en fonction de l'écart de température intérieure et de la différence de température, de sorte que

$$Dur\acute{e}e = f\big(dT_{int}, \Delta T(t = 0)\big)$$

6. Procédé (100) selon la revendication 5, dans lequel l'étape 2 de modélisation comprend de calculer une différence de température moyenne entre l'intérieur et l'extérieur sur la durée d'une phase de relance, tel que : $\overline{\Delta T} = \overline{T_{Ext}(to, to + dur\acute{e}e)} - T_{Int}(to, to + dur\acute{e}e)$

7. Procédé (100) selon la revendication 6, dans lequel l'étape 2 de modélisation comprend de déterminer une puissance maximale utilisée selon $\max (P_{Elec}) = g(\overline{\Delta T})$ et de déterminer une énergie électrique consommée selon

$$E_{elec} = h(dT_{int}, \overline{\Delta T})$$

8. Procédé (100) selon l'une quelconque des revendications précédentes, dans lequel l'étape 3 de prévision comprend d'intégrer des données prévisionnelles dans le modèle, de sorte qu'une température de consigne est utilisée à la place d'une température intérieure maximale et/ou une température extérieure prévisionnelle est utilisée à la place d'une température extérieure.

9. Dispositif **caractérisé en ce qu'**il comprend de la circuiterie électronique (200) pour implémenter un procédé comprenant au moins les étapes suivantes :

- (Etape 1) Acquérir, pendant une durée prédéterminée, des données de température comprenant une température extérieure de la pièce, une température intérieure de la pièce et une température de consigne du dispositif de chauffage et/ou de refroidissement, des données de puissance électrique consommée par le dispositif de chauffage et/ou de refroidissement ;
- (Etape 2) Modéliser un appel de puissance électrique correspondant à une phase de relance du dispositif de chauffage et/ ou de refroidissement ;
- (Etape 3) Prévoir l'appel de puissance électrique induit par le dispositif de chauffage et/ou de refroidissement ;
- (Etape 4) Piloter le dispositif de chauffage et/ou de refroidissement, en fonction d'une prévision de l'étape 3 pour l'intégrer de manière optimale dans un mix de consommation électrique d'un bâtiment.

10. Produit programme d'ordinateur comprenant des instructions de code de programme pour exécuter le procédé (100) selon l'une quelconque des revendications 1 à 8.

11. Support de stockage non transitoire sur lequel est stocké un programme d'ordinateur comprenant des instructions de code de programme pour exécuter le procédé (100) selon l'une quelconque des revendications 1 à 8, lorsque lesdites instructions sont lues depuis ledit support de stockage non transitoire et exécutées par un processeur.

Fig. 1

Fig. 2

Fig. 3

Fig. 4

Fig. 5

Fig. 6

Europäisches
Patentamt

European
Patent Office

Office européen
des brevets

# RAPPORT DE RECHERCHE EUROPEENNE

Numéro de la demande

EP 25 17 6605

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 369 140 A1 (STIEBEL ELTRON GMBH & CO KG [DE]) 15 mai 2024 (2024-05-15) * alinéas [0058] - [0061], [0063] - [0064], [0152] - [0155]; revendications 1,6,7; figure 1 * ----- | 1-11 | INV. G05D23/19 |
| X | US 2015/066229 A1 (LACROIX BENOIT [FR] ET AL) 5 mars 2015 (2015-03-05) * alinéas [0116], [0117], [0152]; revendication 1 * ----- | 1-11 | |
| X | US 2015/192911 A1 (SLOOP CHRISTOPHER DALE [US] ET AL) 9 juillet 2015 (2015-07-09) * alinéas [0030] - [0033], [0065], [0062], [0043] - [0046], [0053] * ----- | 1-11 | |

|  |
|---|
| DOMAINES TECHNIQUES RECHERCHES (IPC) |
| G05D |

Le présent rapport a été établi pour toutes les revendications

| Lieu de la recherche | Date d'achèvement de la recherche | Examinateur |
|---|---|---|
| Munich | 29 septembre 2025 | Alesandrini, Bruno |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...................................................................................................
& : membre de la même famille, document correspondant

EPO FORM 1503 03.82 (P04C02)

**EP 4 650 906 A1**

## ANNEXE AU RAPPORT DE RECHERCHE EUROPEENNE
## RELATIF A LA DEMANDE DE BREVET EUROPEEN NO.

EP 25 17 6605

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-2025

| Document brevet cité au rapport de recherche | Date de publication | Membre(s) de la famille de brevet(s) | Date de publication |
|---|---|---|---|
| EP 4369140 A1 | 15-05-2024 | DE 102022129932 A1 | 16-05-2024 |
| | | EP 4369140 A1 | 15-05-2024 |
| US 2015066229 A1 | 05-03-2015 | EP 2836880 A1 | 18-02-2015 |
| | | FR 2989476 A1 | 18-10-2013 |
| | | US 2015066229 A1 | 05-03-2015 |
| | | WO 2013153184 A1 | 17-10-2013 |
| US 2015192911 A1 | 09-07-2015 | AUCUN | |

EPO FORM P0460

Pour tout renseignement concernant cette annexe : voir Journal Officiel de l'Office européen des brevets, No.12/82